# EUROPÄISCHE PATENTSCHRIFT

(11) **EP 3 180 525 B1**
(45) Veröffentlichungstag und Bekanntmachung des Hinweises auf die Patenterteilung: **13.03.2019**
(21) Anmeldenummer: 15748242.3
(22) Anmeldetag: 10.08.2015
(51) Int. Cl.: F16B 33/06, F16B 25/00

(54) **BOHRSCHRAUBE**
DRILLING SCREW
TARIÈRE

(30) Priorität: 14.08.2014 DE 102014012142
(43) Veröffentlichungstag der Anmeldung: 21.06.2017
(73) Patentinhaber: SFS Intec Holding AG, 9435 Heerbrugg (CH)
(72) Erfinder: ZÄCH, Marco, CH-9444 Diepoldsau (CH); DUTLER, René, CH-9453 Eichberg (CH); STEYER, Ralf, CH-9323 Steinach (CH)
(86) Internationale Anmeldenummer: PCT/EP2015/068343
(87) Internationale Veröffentlichungsnummer: WO 2016/023855

(56) Entgegenhaltungen:
- EP-A1- 2 716 789
- WO-A1-94/25764
- US-A- 4 802 807
- US-A- 5 419 948

## Beschreibung

Die Erfindung betrifft eine Bohrschraube, hergestellt aus einem austenitischen oder anderen nichtrostenden Grundmaterial, mit einem Schaft, mit einer an einem Schaftende angeordneten schneidenden oder formenden Bohr- oder Gewindespitze und mit einer auf dem Schaft im Bereich der Bohr- oder Gewindespitze und wenigstens im Bereich eines daran anschließenden Gewindes an der Oberfläche ausgebildeten harten Randschicht.

Aus dem Dokument DE 10 2012 009 400 B4, das ein auf die Anmelderin zurückgehendes Patent betrifft, ist eine einteilige Bohrschraube bekannt. Diese bekannte Bohrschraube hat einen einfacheren Aufbau als eine zweiteilige Bohrschraube, bei der die beiden Teile miteinander verschweißt sind, wobei einer dieser beiden Teile die Bohrspitze und den gewindeformenden Bereich umfasst und beispielshalber aus Kohlenstoffstahl besteht, der durch Induktions- oder Flammhärten abschließend gehärtet wurde.

Diese bekannte Schraube wird stets nur einmal eingesetzt. Für den dafür erforderlichen einmaligen Bohrvorgang hat sich eine auf die Bohr- oder Gewindespitze galvanisch aufgebrachte harte Beschichtung, die eine Übergangsmetall- oder Chromschicht umfasst, als standfest erwiesen. Einfaches Beschichten wie Chromatieren oder Hartchromatieren oder, allgemeiner, das galvanische Aufbringen der harten Beschichtung als eine Schicht, die ein Übergangsmetall enthält, allenfalls mit geeigneten Additiven, reicht demnach aus, um die bekannte Bohrschraube mindestens einmal einsetzen zu können. Dabei sind entgegen der Meinung des Fachmannes solche harten Beschichtungen erzielbar, ohne dass der sogenannte Eierschaleneffekt auftritt. Die Bohrschraube nach dem vorgenannten Dokument gewährleistet aufgrund der aufgebrachten Beschichtung die verlangte Bohrleistung und die verlangte Gewindeformung.

Eine Bohrschraube der eingangs genannten Art ist aus dem Dokument US 5 419 948 A bekannt. Diese bekannte Bohrschraube wird zum Härten mit Stickstofftrifluorid an ihrer Oberfläche chemisch umgesetzt, das heißt nitriert. Durch das Nitrieren wird bei der bekannten Schraube, die an sich nichtrostend ist, eine ultraharte Oberflächenschicht erzeugt, die rostanfällig ist und anschließend an die Nitrierung wieder beseitigt werden muss, und zwar im Bereich des Schraubenkopfes.

Aus dem Dokument US 4 802 807 A ist eine Bohrschraube bekannt, bei der Korrosionsbeständigkeit durch Verzinken erreicht wird, also durch galvanisch aufgebrachtes Zink. Zusätzlich wird bei dieser bekannten Bohrschraube auf dem Zinküberzug ein Aluminiumüberzug hergestellt. Der Aluminiumüberzug wird auf die verzinkte Schraube durch lonendampfniederschlagstechnik aufgebracht. Der Verbundüberzug, der so entsteht, soll nicht nur die Korrosionsbeständigkeit verbessern, sondern auch das Drehmoment beim Eindrehen der Bohrschraube verringern. Schließlich wird ein Topcoat auf die Bohrschraube aufgebracht, um zu verhindern, dass der Aluminiumüberzug oxidiert.

Aufgabe der Erfindung ist es, ausgehend von einer Bohrschraube nach dem oben zitierten Dokument US 5 419 948 A die Bohrleistung und die Gewindeformung auf einfachere Weise zu verbessern.

Ausgehend von dieser bekannten Bohrschraube wird die angestrebte weitere Verbesserung der Bohrleistung und der Gewindeformung erfindungsgemäß dadurch erzielt, dass wenigstens auf die harte Randschicht der Bohr- oder Gewindespitze eine harte Beschichtung galvanisch aufgebracht ist, die eine ein Übergangsmetall enthaltende Schicht umfasst, und dass auf die harte Beschichtung ein Topcoat aus einem schmierenden und wärmeabführenden Stoff aufgebracht ist.

Bei der erfindungsgemäßen Bohrschraube verbessert die harte Randschicht das Haftvermögen der auf sie galvanisch aufgebrachten harten Beschichtung. Die harte Beschichtung ihrerseits verbessert das Haftvermögen des auf sie aufgebrachten Topcoats. Der Topcoat seinerseits verbessert aufgrund seiner Herstellung aus einem schmierenden und wärmeabführenden Stoff die Standfestigkeit der harten Beschichtung. Diese Verbesserung der Standfestigkeit der harten Beschichtung führt zu der angestrebten Verbesserung der Bohrleistung und der Gewindeformung. Die angestrebte Verbesserung der Bohrleistung und der Gewindeformung wird bei der erfindungsgemäßen Bohrschraube, die von Haus aus nichtrostend ist, erzielt, ohne dass die Bohrschraube in einen rostanfälligen Zustand versetzt wird, der wenigstens zum Teil wieder beseitigt werden muss.

Das Vermeiden des eingangs erwähnten Eierschaleneffekts wird bei der Bohrschraube nach der Erfindung dank der harten Randschicht, die der Schaft unter der harten Beschichtung aufweist, zuverlässig erreicht.

Es sind bereits Topcoats aus einem schmierenden Gleitlack bekannt, zum Beispiel der Gleitlack F 417 nach einer der Anmelderin vorliegenden technischen Produktinformation der Tevier Öl-Fenkart GmbH, die ihren Sitz in 6845 Hohenems/Österreich hat. Dieser Gleitlack, der MoS₂ enthält, ist druckbeständig und soll eine Lebensdauerschmierung von Bauteilen des allgemeinen Maschinenbaus und der Automobil- und Zulieferindustrie bewirken. Er ist zwar auch für Schrauben einsetzbar, der Einsatz von solchen Gleitlacken bei Bohrschrauben ist der Anmelderin jedoch nicht bekannt.

Der erfindungsgemäß auf die harte Beschichtung aufgebrachte Topcoat aus einem schmierenden und wärmeabführenden Stoff verbessert nicht nur die Wärmeabfuhr, sondern reduziert auch die bei dem Eindrehvorgang der Bohrschraube nach der Erfindung entstehende Wärme durch Verringerung der Reibung, führt also nicht nur Wärme ab, sondern reduziert auch die überhaupt abzuführende Wärmemenge.

Die harte Randschicht lässt sich insbesondere durch Wahl eines geeigneten Umformgrades erzielen, wenn die Bohrschraube geformt wird und bevor auf den Schaft der Bohrschraube die harte Beschichtung galvanisch aufgebracht wird.

Bei der Bohrschraube nach der Erfindung gewährleisten die harte Randschicht und die auf diese aufgebrachte harte Beschichtung sowie der auf die harte Beschichtung aufgebrachte Topcoat das einmalige Bohren sowie das Einformen des Gewindes in Stahl bei optimaler Bohrleistung und optimaler Gewindeformung.

Die Wärmeabfuhr wird bei der Bohrschraube nach der Erfindung über eine größere Oberfläche und aufgrund einer speziellen Topologie der Oberfläche, welche auch die Haftung des Topcoats begünstigt, gewährleistet.

Die Parameter der harten Beschichtung und des Topcoats wie Schichtdicken, Härte, Haftfestigkeit, Gleiteigenschaften, Rauigkeit, Temperaturbeständigkeit, Wärmeleitfähigkeit lassen sich jeweils auf die Anwendung hin optimieren.

Vorteilhafte Ausgestaltungen der Erfindung bilden die Gegenstände der abhängigen Ansprüche.

In einer Ausgestaltung der Bohrschraube nach der Erfindung umfasst der schmierende und wärmeabführende Stoff Metall, Wachs und/oder Lack. Bereits dadurch lassen sich die vorgenannten Parameter der harten Beschichtung auf die Anwendung hin optimieren.

In einer weiteren Ausgestaltung der Bohrschraube nach der Erfindung weist die harte Beschichtung gemeinsam mit dem Topcoat eine Wärmeleitfähigkeit von λ > 9 W/mK auf, wodurch die angestrebte Optimierung hinsichtlich Bohrleistung und Gewindeformung noch zuverlässiger erreicht wird.

In einer weiteren Ausgestaltung der Bohrschraube nach der Erfindung umfasst der Topcoat eine Schicht, die in sich Schichtdickenunterschiede von maximal +/- 60% aufweist, wodurch das Haftvermögen des Topcoats auf der harten Beschichtung noch sicherer gewährleistet wird.

In einer weiteren Ausgestaltung der Bohrschraube nach der Erfindung umfasst der Topcoat eine Schicht, die in sich Schichtdickenunterschiede von maximal +/- 30% aufweist. Diese maximalen Schichtdickenunterschiede sind einfacher erzielbar als bei der zuvor genannten Ausgestaltung der Bohrschraube nach der Erfindung, gewährleisten aber trotzdem ein ausreichendes Haftvermögen des Topcoats auf der harten Beschichtung und eine ausreichende Wärmeabfuhr durch den Topcoat.

In einer weiteren Ausgestaltung der Bohrschraube nach der Erfindung ist der Topcoat mit metallischen Partikeln versetzt. Diese Partikel können, wie an sich bekannt, aus MoS₂ bestehen, also aus zumindest schmierenden Partikeln. Die Erfinder haben erkannt, dass sich durch solche an sich zur Schmierung eingesetzten Partikel auch eine Verbesserung der Wärmeabfuhr bei dem Eindrehvorgang der Bohrschraube nach der Erfindung erzielen lässt.

Eine Verbesserung der Wärmeabfuhr ergibt sich aber überraschend auch bei dem Einsatz von lediglich wärmeabführenden Partikeln aus Au, Ag, Cu oder dgl., die eine weitere Ausgestaltung der Bohrschraube nach der Erfindung darstellen. Grundsätzlich gilt, dass die meiste Wärme über den bei dem Bohrvorgang entstehenden Span abgegeben wird, wobei aber Lack und/oder Wachs (mit und ohne metallische Partikel oder Metallpulver) diesen Effekt noch positiv unterstützen.

In einer weiteren Ausgestaltung der Bohrschraube nach der Erfindung weist das Grundmaterial eine Härte von 100 bis 300 HV0,1 und vorzugsweise von 150 bis 200 HV0,1 auf. Ein Grundmaterial mit einer solchen Härte hat sich als besonders vorteilhaft herausgestellt.

In einer weiteren Ausgestaltung der Bohrschraube nach der Erfindung weist die harte Randschicht eine Härte von 300 bis 600 HV0,1 auf. Eine harte Randschicht mit einer solchen Härte hat sich als besonders vorteilhaft herausgestellt.

In einer weiteren Ausgestaltung der Bohrschraube nach der Erfindung weist die harte Beschichtung eine zacken- oder perlartige Topographie auf. Es hat sich gezeigt, dass beide Arten der Topographie für ausreichende Dickenunterschiede sorgen, welche ein ausreichendes Haftvermögen des Topcoats gewährleisten.

In einer weiteren Ausgestaltung der Bohrschraube nach der Erfindung weist die harte Beschichtung eine Härte von mindestens 700 HV0,1 auf. Eine harte Beschichtung mit einer solchen Härte hat sich als vorteilhaft herausgestellt.

In einer weiteren Ausgestaltung der Bohrschraube nach der Erfindung weist die harte Beschichtung eine Härte zwischen 800 und 1400 HV0,1 auf. Eine harte Beschichtung mit einer solchen Härte hat sich als besonders vorteilhaft herausgestellt.

In einer weiteren Ausgestaltung der Bohrschraube nach der Erfindung weist die harte Beschichtung eine Dicke von maximal 60 µm auf. Diese Dicke der harten Beschichtung hat sich als zweckmäßig erwiesen bei dem Gewährleisten von Bohrleistung und Gewindeformung der Bohrschraube sowie dem Haftvermögen des Topcoats auf der harten Beschichtung.

Weiter schafft die Erfindung die Verwendung einer Bohrschraube nach Anspruch 1 oder einem der abhängigen Ansprüche zum Herstellen einer Verbindung mit mindestens einem von der Bohrschraube durchbohrten Verbindungselement aus Stahl, wobei sich diese Verwendung besonders eignet, wenn eines von mindestens zwei aneinander zu befestigenden Bauteilen der Bewitterung ausgesetzt ist. Die Herstellung der Bohrschraube nach der Erfindung aus einem nichtrostenden Grundmaterial bringt es mit sich, dass der Teil der Bohrschraube, welcher der Bewitterung ausgesetzt ist, keinen zusätzlichen Rostschutz wie bei der herkömmlichen zweiteiligen Bohrschraube nach dem eingangs erwähnten Dokument DE 10 2012 009 400 B4 oder wie bei der Bohrschraube nach dem Dokument US 4 802 807 A benötigt. Die Bohrspitze, das heißt der der Bewitterung ausgesetzte Teil der herkömmlichen zweiteiligen Bohrschraube verlangt besondere Maßnahmen zu seiner Korrosionsbeständigkeit, weil die Bohrspitze aus Kohlenstoffstahl besteht, damit sie gehärtet werden kann. Der gewindeformende Bereich der herkömmlichen zweiteiligen Schraube besteht aus nichtrostendem Stahl.

Vorteilhafte Ausführungsbeispiele der Erfindung werden im Folgenden unter Bezugnahme auf die Zeichnungen näher beschrieben. Es zeigt
- Figur 1: als ein erstes Ausführungsbeispiel der Erfindung eine Blechbohrschraube, die mit einer Gewindespitze versehen ist, und als eine Einzelheit eine Gewindeflanke in vergrößertem Maßstab;
- Figur 2: eine Bohrspitze eines zweiten Ausführungsbeispiels der Bohrschraube nach der Erfindung zusammen mit einer Ecke der Bohrspitze als eine Einzelheit in vergrößertem Maßstab,
- Figur 3: einen Teil der Einzelheit nach Figur 2 oder Figur 3 in einem noch größeren Maßstab;
- Figur 4: symbolisch die Wärmeabfuhr aus einer Gewindeflanke oder Bohrspitze über einen Span;
- Figur 5: in gleicher Darstellung wie in Figur 4 eine Wärmeabfuhr hauptsächlich über die Oberfläche der Gewindeflanke oder Bohrspitze in einem Bereich neben einem Span;
- Figur 6: als ein erstes Beispiel einer Verwendung der Bohrschraube nach der Erfindung die Befestigung eines Wellbleches an einem vertikalen Holm;
- Figur 7: als ein zweites Beispiel einer Verwendung der Bohrschraube nach der Erfindung die Befestigung eines Trapezbleches an einem Doppel-T-Träger; und
- Figur 8: als ein drittes Beispiel einer Verwendung der Bohrschraube nach der Erfindung eine gegenseitige Befestigung von zwei Trapezblechen.

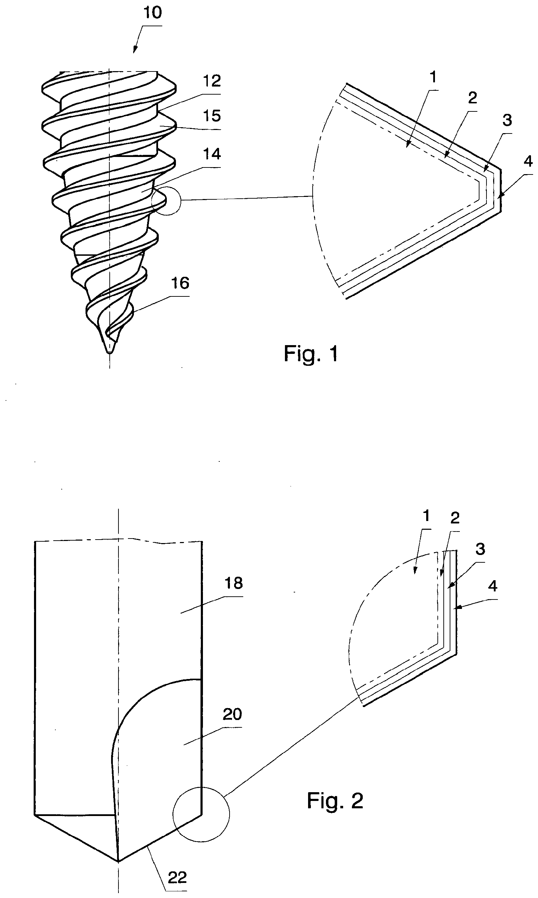

Figur 1 zeigt als ein erstes Ausführungsbeispiel der Erfindung eine Blechbohrschraube 10 mit einem Schaft 12, der einen gewindeformenden Bereich 14 und eine Gewindespitze 16 aufweist. Die Schraube hat einen Kopf, zum Beispiel einen üblichen Sechskantkopf, der aber in Figur 1 nicht dargestellt ist. Die Blechbohrschraube 10 ist einstückig aus einem austenitischen oder anderen nichtrostenden Stahl hergestellt, welcher das Grundmaterial der Schraube bildet. Figur 1 zeigt weiter als eine Einzelheit eine Gewindeflanke der Blechbohrschraube 10 in einem vergrößerten Maßstab. In dieser Einzelheit ist das Grundmaterial der Schraube mit 1 bezeichnet. Der Schaft 12 ist im Bereich der Gewindespitze 16 und wenigstens im Bereich eines daran anschließenden Gewindes 15 an der Oberfläche härter ausgebildet als der übrige Teil der Blechbohrschraube 10. Diese härtere Ausbildung der Oberfläche ist wichtig, damit die Blechbohrschraube 10 ihre Funktion erfüllen kann, nämlich mit der Gewindespitze 16 ein Loch zu bohren und dann in dem Loch ein Gewinde zu formen. Das austenitische oder andere nichtrostende Grundmaterial 1 der Blechbohrschraube 10 wäre nämlich von Haus aus dafür nicht geeignet. Das Grundmaterial wäre für diesen Zweck zu weich.

In dem härter ausgebildeten Bereich ist die Blechbohrschraube 10 mit einer harten Randschicht 2 und diese wiederum mit einer harten Beschichtung 3 versehen. Wenigstens in dem Bereich unterhalb der harten Beschichtung 3 weist die Blechbohrschraube 10 eine harte Randschicht 2 auf. Auf die harte Randschicht 2 ist die harte Beschichtung 3 als eine dünne Schicht, zum Beispiel als eine Hartchromschicht, insbesondere gemäß deutschem Patent DE 25 02 284 C2, galvanisch aufgebracht. Statt einer Hartchromschicht kann allgemein eine ein Übergangsmetall enthaltende Schicht gewählt werden, die sich galvanisch aufbringen lässt.

Die harte Randschicht 2 lässt sich insbesondere durch Wahl eines geeigneten Umformgrades erzielen, wenn die Blechbohrschraube 10 geformt wird und bevor auf den Schaft 12 und die Gewindespitze 16 der Blechbohrschraube die harte Beschichtung 3 galvanisch aufgebracht wird. Abgesehen von der harten Beschichtung 3 wird die Blechbohrschraube 10 auf übliche Weise hergestellt, indem ein Schraubenrohling mechanisch umgeformt, das heißt gewalzt und dabei mit der Gewindespitze 16 und dem übrigen Gewinde der Blechbohrschraube 10 versehen wird. Je größer der Umformgrad ist, umso härter wird die harte Randschicht 2 ausgebildet.

Das Grundmaterial 1, das bei der Blechbohrschraube nach der Erfindung zum Einsatz kommt, weist eine Härte von 100 bis 300 HV0,1 und vorzugweise von 150 bis 200 HV0,1 auf. Die harte Randschicht 2 weist eine Härte von 300 bis 600 HV0,1 auf.

Die harte Beschichtung 3 weist eine zacken- oder perlartige Topographie auf und hat eine Dicke von maximal 60 µm. Ferner weist die harte Beschichtung eine Härte von mindestens 700 HV0,1 und vorzugsweise eine Härte zwischen 800 und 1400 HV0,1 auf.

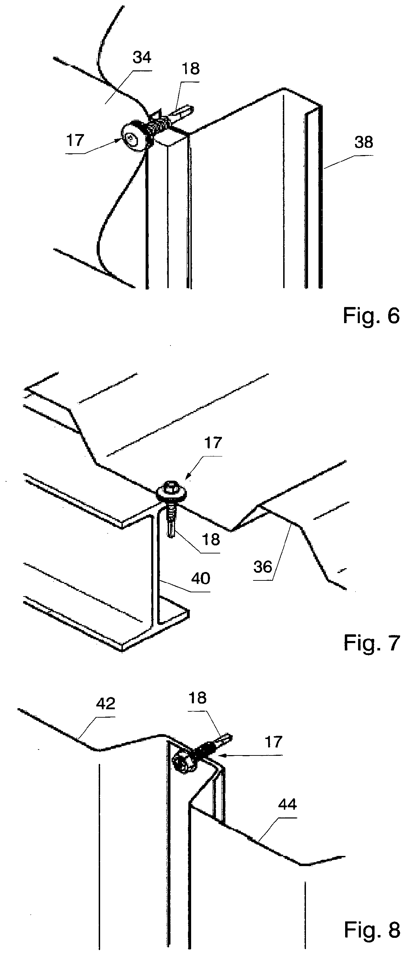

Figur 2 zeigt eine Bohrspitze eines zweiten Ausführungsbeispiels einer in Figur 8 gezeigten Bohrschraube 17, die statt einer Gewindespitze wie die Blechbohrschraube 10 nach Figur 1 mit einer Bohrspitze 18 versehen ist. An diese Bohrspitze 18 schließt sich nach oben ein Schaft wie der Schaft 12 mit einem Gewinde wie das Gewinde des Schaftes 12 in Figur 1 an, die in Figur 2 aber nicht dargestellt sind. Die Bohrspitze 18 ist an dem in Figur 2 nicht dargestellten Schaft angeformt so wie die Gewindespitze 16 an den Schaft 12 angeformt ist. Anders als die Gewindespitze 16 hat die Bohrspitze 18 eine Bohrschneide 20 mit einer Schneidkante 22. Die oben zu der Blechbohrschraube 10 gemachten Ausführungen gelten somit auch für die in Figur 2 nur durch ihre Bohrspitze 18 dargestellte Bohrschraube. In Figur 2 ist zusätzlich eine Ecke der Bohrspitze 18 als eine Einzelheit in vergrößertem Maßstab gezeigt. Diese Einzelheit lässt erkennen, dass die Bohrschraube nach Figur 2 auf ihrem Grundmaterial 1 die harte Randschicht 2 und die harte Beschichtung 3 aufweist. Sowohl bei der Blechbohrschraube 10 nach Figur 1 als auch bei der Bohrschraube 17 nach den Figuren 2 und 8 ist auf die harte Beschichtung 3 ein Topcoat 4 aus einem schmierenden und wärmeabführenden Stoff aufgebracht. Ein geeigneter schmierender und wärmeabführender Stoff umfasst Metall, Wachs und/oder Lack. Der Topcoat ist vorzugsweise mit metallischen Partikeln versetzt, welche MoS₂, Au, Ag oder Cu umfassen.

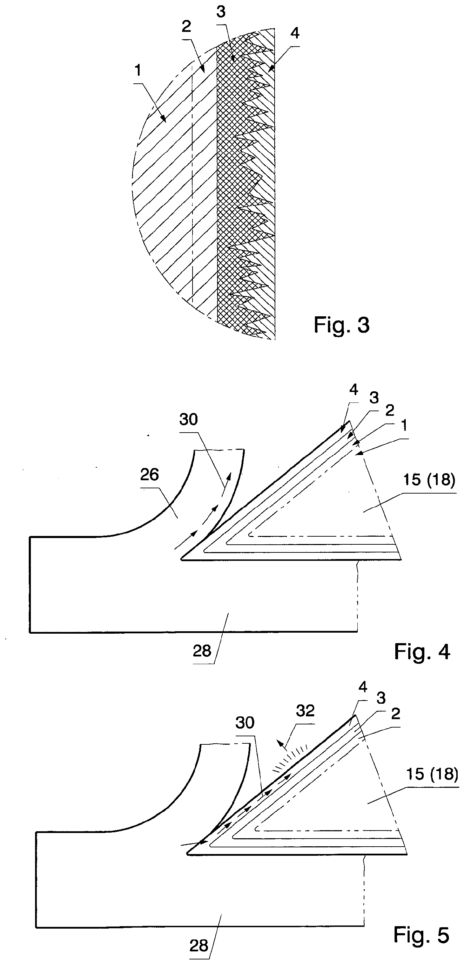

Figur 3 zeigt einen Teil der Einzelheit nach Figur 2 oder 3 in einem noch größeren Maßstab. In dem in Figur 3 gezeigten Ausführungsbeispiel hat die harte Beschichtung 3 eine zackige Struktur. Somit umfasst der auf die harte Beschichtung 3 aufgebrachte Topcoat 4 eine Schicht, die in sich Schichtdickenunterschiede aufweist. Diese Schichtdickenunterschiede betragen maximal +/- 60%, vorzugsweise maximal +/- 30%.

Die harte Beschichtung 3 weist mit dem Topcoat 4 eine Wärmeleitfähigkeit von λ > 9 W/mK auf.

Figur 4 zeigt symbolisch die Wärmeabfuhr aus der Gewindeflanke 15 oder der Bohrspitze 18 über einen Span 26 für den Fall, dass in ein Werkstück 28 ein Loch gebohrt wird, das mit Gewinde versehen werden soll. In Figur 4 besteht das Werkstück 28 aus einem gut wärmeleitenden Material, weshalb der Span 26 gut Wärme abführt, die in Figur 4 durch eine Reihe von Pfeilen 30 dargestellt ist. Wenn das Werkstück 28 aus einem schlecht wärmeleitenden oder aus einem wärmeisolierenden Material besteht, wird die bei dem Bohr- oder Gewindeschneidvorgang entstehende Wärme in die Gewindeflanke 15 oder die Bohrspitze 18 eingeleitet und über den Topcoat 4 nach außen abgegeben, was in Figur 5 durch eine Reihe von Pfeilen 30 beziehungsweise einen Pfeil 32 dargestellt ist.

Die Figuren 6 bis 8 zeigen die Verwendung der Bohrschraube 17 zum Herstellen einer Verbindung mit mindestens einem von der Bohrschraube durchbohrten Verbindungselement aus Stahl. Das Verbindungselement ist in diesen Figuren als ein Wellblech 34 beziehungsweise als ein Trapezblech 36, 42 und 44 dargestellt. Figur 6 zeigt als ein erstes Beispiel der Verwendung der Bohrschraube 17 die Befestigung eines Wellbleches 34 an einem vertikalen Holm 38. Figur 7 zeigt als ein zweites Beispiel der Verwendung der Bohrschraube 17 die Befestigung eines Trapezbleches 36 an einem Doppel-T-Träger 40. Figur 8 zeigt als ein drittes Beispiel der Verwendung der Bohrschraube 17 eine gegenseitige Befestigung von zwei Trapezblechen 42, 44. Die Schrauben 17 sind in den Figuren 6 bis 8 mit unterschiedlichen Köpfen dargestellt.

### Bezugszeichenliste

- 1: Grundmaterial
- 2: harte Randschicht
- 3: harte Beschichtung
- 4: Topcoat
- 10: Blechbohrschraube
- 12: Schaft
- 14: gewindeformender Bereich
- 15: Gewindeflanke
- 16: Gewindespitze
- 17: Bohrschraube
- 18: Bohrspitze
- 20: Bohrschneide
- 22: Schneidkante
- 24: Topcoat
- 26: Span
- 28: Werkstück
- 30: Pfeil
- 32: Pfeil
- 34: Wellblech
- 36: Trapezblech
- 38: Holm
- 40: Doppel-T-Träger
- 42: Trapezblech
- 44: Trapezblech

## Patentansprüche

1. Bohrschraube, hergestellt aus einem austenitischen oder anderen nichtrostenden Grundmaterial (1), mit einem Schaft (12), mit einer an einem Schaftende angeordneten schneidenden oder formenden Bohr- oder Gewindespitze (16, 18) und mit einer auf dem Schaft (12) im Bereich der Bohr- oder Gewindespitze (16) und wenigstens im Bereich eines daran anschließenden Gewindes (15) an der Oberfläche ausgebildeten harten Randschicht (2),
**dadurch gekennzeichnet, dass** wenigstens auf die harte Randschicht (2) der Bohr- oder Gewindespitze (16, 18) eine harte Beschichtung (3) galvanisch aufgebracht ist, die eine ein Übergangsmetall enthaltende Schicht umfasst, und dass auf die harte Beschichtung (3) ein Topcoat (4) aus einem schmierenden und wärmeabführenden Stoff aufgebracht ist.

2. Bohrschraube nach Anspruch 1, **dadurch gekennzeichnet, dass** der schmierende und wärmeabführende Stoff Metall, Wachs und/oder Lack umfasst.

3. Bohrschraube nach Anspruch 1 oder 2, **dadurch gekennzeichnet, dass** die harte Beschichtung (3) mit dem Topcoat (4) eine Wärmeleitfähigkeit von λ > 9 W/mK aufweist.

4. Bohrschraube nach einem der vorhergehenden Ansprüche, **dadurch gekennzeichnet, dass** der Topcoat (4) eine Schicht umfasst, die in sich Schichtdickenunterschiede von maximal +/- 60% aufweist.

5. Bohrschraube nach einem der vorhergehenden Ansprüche, **dadurch gekennzeichnet, dass** der Topcoat (4) eine Schicht umfasst, die in sich Schichtdickenunterschiede von maximal +/- 30% aufweist.

6. Bohrschraube nach einem der vorhergehenden Ansprüche, **dadurch gekennzeichnet, dass** der Topcoat (4) mit metallischen Partikeln versetzt ist.

7. Bohrschraube nach Anspruch 6, **dadurch gekennzeichnet, dass** die metallischen Partikel MoS₂, Au, Ag oder Cu umfassen.

8. Bohrschraube nach einem der vorhergehenden Ansprüche, **dadurch gekennzeichnet, dass** das Grundmaterial (1) eine Härte von 100 bis 300 HV0,1 und vorzugsweise von 150 bis 200 HV0,1 aufweist.

9. Bohrschraube nach einem der vorhergehenden Ansprüche, **dadurch gekennzeichnet, dass** die harte Randschicht (2) eine Härte von 300 bis 600 HV0,1 aufweist.

10. Bohrschraube nach einem der vorhergehenden Ansprüche, **dadurch gekennzeichnet, dass** die harte Beschichtung (3) eine zacken- oder perlartige Topographie aufweist.

11. Bohrschraube nach einem der vorhergehenden Ansprüche, **dadurch gekennzeichnet, dass** die harte Beschichtung (3) eine Härte von mindestens 700 HV0,1 aufweist.

12. Bohrschraube nach einem der vorhergehenden Ansprüche, **dadurch gekennzeichnet, dass** die harte Beschichtung (3) eine Härte zwischen 800 und 1400 HV0,1 aufweist.

13. Bohrschraube nach einem der vorhergehenden Ansprüche, **dadurch gekennzeichnet, dass** die harte Beschichtung (3) eine Dicke von maximal 60 µm aufweist.

14. Verwendung einer Bohrschraube nach einem der vorhergehenden Ansprüche zum Herstellen einer Verbindung mit mindestens einem von der Bohrschraube durchbohrten Verbindungselement aus Stahl.

## Claims

1. A self-drilling screw produced from an austenitic or other rust-resistant base material (1), comprising a shank (12) having a cutting or shaping drilling tip or threaded tip (16, 18) arranged at one shank end and having a hard edge layer (2) formed on the surface of the shank (12) in the region of the drilling tip or threaded tip (16) and at least in the region of a thread (15) adjacent thereto, **characterised in that** a hard coating (3) is galvanically applied at least to the hard edge layer (2) of the drilling tip or threaded tip (16, 18), said hard coating comprising a layer containing a transition metal, and **in that** a top coat (4) made of a lubricating and heat-dissipating material is applied to the hard coating (3).

2. The self-drilling screw according to Claim 1, **characterised in that** the lubricating and heat-dissipating material comprises metal, wax and/or lacquer.

3. The self-drilling screw according to Claim 1 or 2, **characterised in that** the hard coating (3), together with the top coat (4), has a thermal conductivity of λ > 9 W/mK.

4. The self-drilling screw according to one of the preceding claims, **characterised in that** the top coat (4) comprises a layer which intrinsically has differences in layer thickness of a maximum of +/-60%.

5. The self-drilling screw according to one of the preceding claims, **characterised in that** the top coat (4) comprises a layer which intrinsically has differences in layer thickness of a maximum of +/-30%.

6. The self-drilling screw according to one of the preceding claims, **characterised in that** the top coat (4) is mixed with metal particles.

7. The self-drilling screw according to Claim 6, **characterised in that** the metal particles comprise MoS₂, Au, Ag or Cu.

8. The self-drilling screw according to one of the preceding claims, **characterised in that** the base material (1) has a hardness of 100 to 300 HV0.1 and preferably of 150 to 200 HV0.1.

9. The self-drilling screw according to one of the preceding claims, **characterised in that** the hard edge layer (2) has a hardness of 300 to 600 HV0.1.

10. The self-drilling screw according to one of the preceding claims, **characterised in that** the hard coating (3) has a serrated or beaded topography.

11. The self-drilling screw according to one of the preceding claims, **characterised in that** the hard coating (3) has a hardness of at least 700 HV0.1.

12. The self-drilling screw according to one of the preceding claims, **characterised in that** the hard coating (3) has a hardness of between 800 and 1400 HV0.1.

13. The self-drilling screw according to one of the preceding claims, **characterised in that** the hard coating (3) has a maximum thickness of 60 µm.

14. A use of a self-drilling screw according to one of the preceding claims for producing a connection with at least one connecting element made of steel which is drilled through by said self-drilling screw.

## Revendications

1. Vis autotaraudeuse, fabriquée à partir d'un matériau de base austénitique ou autre inoxydable (1), avec une queue (12), avec une pointe de perçage ou de filetage coupante ou formatrice disposée à une extrémité de la queue (16,18) et avec une couche superficielle (2) dure constituée à la surface sur la queue (12) dans la zone de la pointe de perçage ou de filetage (16) et au moins dans la zone d'un filetage (15) s'y raccordant, **caractérisée en ce qu'**un revêtement dur (3) est appliqué de manière galvanique au moins sur la couche de surface dure (2) de la pointe de perçage ou de filetage (16,18), qui comprend une couche contenant un métal de transition et **en ce qu'**une couche de finition (4) d'une matière lubrifiante et caloporteuse est appliquée sur le revêtement dur (3).

2. Vis autotaraudeuse selon la revendication 1, **caractérisée en ce que** la matière lubrifiante et caloporteuse comprend du métal, de la cire et/ou de la laque.

3. Vis autotaraudeuse selon la revendication 1 ou 2, **caractérisée en ce que** le revêtement dur (3) avec la couche de finition (4) comporte une conductivité thermique de λ > 9 W/mK.

4. Vis autotaraudeuse selon l'une quelconque des revendications précédentes, **caractérisée en ce que** la couche de finition (4) comprend une couche qui comporte en elle-même des différences d'épaisseur de couche d'un maximum de +/- 60 %.

5. Vis autotaraudeuse selon l'une quelconque des revendications précédentes, **caractérisée en ce que** la couche de finition (4) comprend une couche qui comporte en elle-même des différences d'épaisseur de couche d'un maximum de +/- 30 %.

6. Vis autotaraudeuse selon l'une quelconque des revendications précédentes, **caractérisée en ce que** la couche de finition (4) est mélangée à des particules métalliques.

7. Vis autotaraudeuse selon la revendication 6, **caractérisée en ce que** les particules métalliques comprennent du MoS₂, de l'Au, de l'Ag ou du Cu.

8. Vis autotaraudeuse selon l'une quelconque des revendications précédentes, **caractérisée en ce que** le matériau de base (1) comporte une dureté de 100 à 300 HV0,1 et de préférence de 150 à 200 HV0,1.

9. Vis autotaraudeuse selon l'une quelconque des revendications précédentes, **caractérisée en ce que** la couche de surface dure (2) comporte une dureté de 300 à 600 HV0,1.

10. Vis autotaraudeuse selon l'une quelconque des revendications précédentes, **caractérisée en ce que** le revêtement dur (3) comporte une topographie en dents de scie ou de type perlé.

11. Vis autotaraudeuse selon l'une quelconque des revendications précédentes, **caractérisée en ce que** le revêtement dur (3) comporte une dureté d'un minimum de 700 HV0,1.

12. Vis autotaraudeuse selon l'une quelconque des revendications précédentes, **caractérisée en ce que** le revêtement dur (3) comporte une dureté se situant entre 800 et 1400 HV0,1.

13. Vis autotaraudeuse selon l'une quelconque des revendications précédentes, **caractérisée en ce que** le revêtement dur (3) comporte une épaisseur d'un maximum de 60 µm.

14. Utilisation d'une vis autotaraudeuse selon l'une quelconque des revendications précédentes pour la fabrication d'une liaison avec au moins un élément de liaison en acier transpercé par la vis autotaraudeuse.
